# EUROPÄISCHE PATENTSCHRIFT

(11) **EP 0 673 473 B1**
(45) Veröffentlichungstag und Bekanntmachung des Hinweises auf die Patenterteilung: **01.10.1997**
(21) Anmeldenummer: 93924572.6
(22) Anmeldetag: 02.11.1993
(51) Int. Cl.: F01N 3/28, B01J 35/04

(54) **KATALYTISCHER KONVERTER MIT ZWEI ODER MEHR WABENKÖRPERN IN EINEM MANTELROHR UND VERFAHREN ZU SEINER HERSTELLUNG**
CATALYTIC CONVERTER WITH TWO OR MORE HONEYCOMB ELEMENTS INSIDE A TUBULAR SHEALTH, AND A METHOD OF MANUFACTURING IT
CONVERTISSEUR CATALYTIQUE A DEUX OU PLUSIEURS CORPS EN NID-D'ABEILLES CONTENUS DANS UNE ENVELOPPE TUBULAIRE, ET SON PROCEDE DE FABRICATION

(30) Priorität: 09.12.1992 DE 4241469
(43) Veröffentlichungstag der Anmeldung: 27.09.1995
(73) Patentinhaber: Emitec Gesellschaft für Emissionstechnologie mbH, 53797 Lohmar (DE)
(72) Erfinder: Wieres, Ludwig, D-51491 Overath (DE); Reck, Alfred, D-51515 Kürten (DE)
(74) Vertreter: Kahlhöfer, Hermann, Dipl.-Phys.
(86) Internationale Anmeldenummer: EP9303057
(87) Internationale Veröffentlichungsnummer: WO9413939

(56) Entgegenhaltungen:
- DE-A- 3 939 490
- FR-A- 2 214 818
- GB-A- 2 020 190
- US-A- 5 096 111

## Beschreibung

Die vorliegende Erfindung betrifft einen katalytischen Konverter mit zwei oder mehr in einem Mantelrohr angeordneten Wabenkörpern sowie ein Verfahren zu seiner Herstellung. Katalytische Konverter dienen insbesondere zur Reinigung von Abgasen aus Verbrennungsmaschinen und werden hauptsächlich in Kraftfahrzeugen eingesetzt. Zur Erzielung einer großen Oberfläche bestehen solche Konverter im allgemeinen aus einem oder mehreren Wabenkörpern, welche eine Vielzahl von Kanälen aufweisen, die von einem Abgas durchströmbar sind. Da sich solche Wabenkörper nicht monolithisch mit beliebig großem Volumen herstellen lassen, ist es seit langem bekannt, mehrere Wabenkörper hintereinander in einem Mantelrohr anzuordnen. Der zwischen solchen Wabenkörpern verbleibende Zwischenraum kann unter Umständen eine zusätzliche Durchschmischung bewirken und dadurch zusätzliche Vorteile bringen.

Durch die FR-A-2 214 818 ist ein katalytischer Konverter, umfassend ein Mantelrohr, mit einem Innendurchmesser, in dem mindestens zwei einzelne, in dem Mantelrohr angeordnete, von einem Fluid in Strömungsrichtung durchströmbare Wabenkörper aus Lagen strukturierter Bleche, welche Strömungskanäle bilden, wobei die Lagen mit dem jeweiligen Mantelrohr hartverlötet sind, bekannt. Die Vorspannung eines Wabenkörpers wird durch eine Patrone, in die ein Wabenkörper eingesetzt wird, ermöglicht.

Um eine relative Bewegung zwischen einer Wabenstruktur und einem Mantelrohr zu verhindern, wird in der GB-A-2 020 190 vorgeschlagen, das Mantelrohr mit dem eingesetzten Wabenkörper in radialer Richtung zu reduzieren. Durch diesen Vorgang wird eine Außendurchmesserreduktion des im Mantel eingesetzten katalytischen Elementes von 0.568 % erreicht.

Obwohl in sehr vielen Schriften zwei oder mehr Wabenkörper ein einem einzigen Mantelrohr dargestellt sind, so z.B. in der DE 39 39 490 A1, von der die vorliegende Erfindung ausgeht, so war es doch bisher kein triviales Problem solche katalytischen Konverter in Großserien wirtschaftlich herzustellen. Aus verschiedenen, im folgenden noch näher erläutert, Gründen, wurden daher katalytische Konverter mit zwei oder mehr Scheiben erst ganz am Schluß des Herstellungs- und Beschichtungsprozesses zusammengebaut (meist verschweißt), so daß die Vorteile einer integrierten Fertigung und Handhabung nur eines einzigen Teiles nicht ausgeschöpft werden konnten.

Ein Grund liegt darin, daß zur Herstellung eines katalytischen Konverters relativ viele Handhabungsschritte notwendig sind. Die Wabenkörper müssen nicht nur in ein Mantelrohr eingesetzt werden, sondern es sind auch verschiedene Schritte zum Aufbringen von Lot, zum Löten und späteren Beschichten erforderlich. Übliche spiralig gewickelte Wabenkörper, wie sie in der DE 39 39 490 A1 beschrieben sind, neigen bei axialer Belastung zu einem gegenseitigen Verschieben der Wickellagen, einem sogenannten Teleskopieren, bevor sie endgültig verlötet sind. Bei der Herstellung müssen daher axiale Kräfte vermieden werden. Außerdem ist ein Löten in aufrechter Position nicht möglich, da die dann auftretenden axialen Schwerkräfte zu einer zwangsläufigen Verschiebung der Lage führen. Auch ist eine genaue Positionierung der Wabenkörper im Mantelrohr nicht leicht möglich. Spiralig aus glatten und gewellten Blechlagen gewickelte Wabenkörper sind wegen der fast kreisförmig verlaufenden glatten Blechlagen nicht sehr elastisch, so daß die von einem solchen Wabenkörper aufzubringenden elastischen Kräfte allein nicht ausreichen, um die bei schnellen Fertigungsprozessen auftretenden axialen Kräfte aufnehmen zu können.

Aus dem Stand der Technik, beispielsweise der EP 0 430 945 B1, der EP 0 279 159 B1 sind jedoch bereits andere Formen von Wabenkörpern bekannt, welche aufgrund ihres speziellen Aufbaus eine erhöhte Elastizität aufweisen.

Aus der EP 0 454 712 B1 sind außerdem Wabenkörper mit quer zur Strömung verlaufenden Mikrostrukturen bekannt, welche neben einer Strömungsbeeinflussung auch ein Verhaken der Folien ineinander bewirken, so daß eine Art von Formschlußverbindungen zwischen den Lagen entsteht, welche gegenseitiges Verschieben verhindert.

Aufgabe der vorliegenden Erfindung ist die Schaffung eines katalytischen Konvertors, der auch unter den Bedingungen einer schnellen Großserienfertigung von Anfang an mit zwei oder mehr Wabenkörpern in einem Mantelrohr herstellbar ist. Außerdem soll ein Verfahren zur Herstellung solcher katalytischer Konverter angegeben werden.

Zur Lösung dieser Aufgabe dient ein katalytischer Konverter umfassend:
- ein Mantelrohr mit einem Innendurchmesser,
- mindestens zwei einzelne, in dem Mantelrohr angeordnete, von einem Fluid in einer Strömungsrichtung durchströmbare Wabenkörper aus Lagen strukturierter Bleche, welche Strömungskanäle bilden,
- wobei die Lagen mit dem Mantelrohr hartverlötet sind,
dadurch gekennzeichnet,
daß aufgrund ihres inneren Aufbaus elastische Wabenkörper unter einer elastischen Kompression von 2 bis 10 % ihres theoretischen spannungsfreien Durchmessers mit Vorspannung in das Mantelrohr eingesetzt sind.

Dabei geht die Erfindung davon aus, daß die bei schnellen Fertigungsprozessen auftretenden Beschleunigungen und die aus verschiedenen technischen und räumlichen Gründen gewünschte aufrechte spätere Lötung von Wabenkörpern nur möglich ist, wenn die Wabenkörper durch erhebliche elastische Kräfte in einem Mantelrohr vollständig fixiert sind und auch die einzelnen Blechlagen untereinander sich nicht mehr verschieben können. Um so hohe elastische Kräfte aufzubringen, müssen die Wabenkörper um mindestens zwei und bis zu zehn Prozent ihres theoretischen spannungsfreien Durchmessers zusammengedrückt werden. Unter dem theoretischen spannungsfreien Durchmesser wird dabei der Durchmesser verstanden, den der Wabenkörper aufgrund der Strukturen seiner Bleche bei einem dichten Wickeln oder Schichten annehmen würde, wenn keine Kompressionskräfte auf ihn ausgeübt werden. Natürlich kann ein Wabenkörper schon bei der Herstellung durch Ausüben von Kompressionskräften verformt werden, so daß er diesen theoretischen spannungsfreien Durchmesser niemals während des Fertigungsprozesses tatsächlich annimmt. Wichtig ist jedoch, daß der Wabenkörper aufgrund seiner Bauart überhaupt elastische Kompressionen dieser Größenordnung zuläßt. Dazu müssen entweder die aus dem Stand der Technik bekannten elastischeren Bauformen oder besondere Wellformen bei den einzelnen Lagen verwendet werden. Besonders geeignet sind hierfür Wabenkörper, die aus einer Vielzahl untereinander verschlungener Bleche bestehen oder auch Wabenkörper bei denen Blechlagen unterschiedlicher Wellung aber keine spiraligen glatten Blechlagen verwendet werden. Die so erzielten elastischen Kräfte reichen sogar aus, um bei einem Hochtemperatur-Vakuumlötprozess noch eine so hohe Restelastizität zu erhalten, daß die Wabenkörper aufrecht stehend gelötet werden können. Zwar kann ein Teil der elastischen Verformung bei diesem Lötprozess in plastische Verformung übergehen, jedoch verbleibt immer noch ein Rest an Elastizität, der während des erschütterungsfreien Lötprozesses ein Verschieben der Wabenkörper und Lagen untereinander verhindert. Während einzeln in einem Mantelrohr angeordnete Wabenkörper schon immer aufrecht gelötet werden konnten, da der Wabenkörper von unten unterstützt werden kann, ist dieses Problem bei zwei oder mehreren Wabenkörpern in einem Mantelrohr nur durch genügend hohe Fixierungskräfte zu lösen, da nicht alle Wabenkörper gleichzeitig von unten gestützt werden können.

Der durch die elastischen Kräfte hervorgerufene Effekt kann durch bestimmte Bauformen oder durch interne Formschlußverbindungen zusätzlich unterstützt werden. Interne Formschlußverbindungen verhindern insbesondere axiale Verschiebungen von spiralig gewickelten Lagen, bei denen solche Verschiebungen sonst besonders leicht auftreten. Die Verwendung von S-förmig verschlungenen Blechen oder von Wabenkörpern mit einer Vielzahl anderweitig Verschlungener Bleche hilft ebenfalls, axiale Verschiebungen der Lagen zu vermeiden, da die Bleche relativ kurz sind und mit ihren Enden am Mantelrohr anliegen, so daß eine Verschiebung durch erheblich höhere Reibungskräfte verhindert wird.

Dieser Effekt kann zusätzlich durch eine geeignete Materialpaarung zwischen Mantelrohr und Wabenkörpern verbessert werden. Dabei spielen nicht nur die Oberflächeneigenschaften der Materialien sondern vor allem auch ihre thermischen Ausdehnungskoeffizienten eine Rolle. Wenn bei einer Wärmebehandlung oder dem Lötprozeß sich das Mantelrohr sehr viel stärker ausdehnt als die Wabenkörper, so lassen die Reibungskräfte nach und es kommt zu unerwünschten Verschiebungen. Obwohl für metallische Wabenkörper sehr häufig austenitische Edelstähle beim Mantelrohr verwendet werden, ist es für die vorliegende Erfindung vorteilhaft, ferritschen korrosionsbeständigen Edelstahl, insbesondere mit den Werkstoffnummern 1.4509 oder 1.4512 zu verwenden.

Die vorliegende Erfindung macht es möglich, auch für katalytische Konverter mit mehreren Wabenkörpern, einstückige Mantelrohre, insbesondere ohne Rundschweißnaht zwischen den Wabenkörpern, zu verwenden.

Grundsätzlich können alle erfindungsgemäßen Vorteile auch genutzt werden, wenn das Mantelrohr gestuft ist und die einzelnen Wabenkörper unterschiedliche Durchmesser aufweisen.

Die Fixierung und Maßgenaue Plazierung der Wabenkörper in einem Mantelrohr kann durch Innensicken unterstützt werden, welche als Anschlag beim Einschieben der Wabenkörper und als Halterung bei den weiteren Fertigungsschritten dienen. Dabei ist es durchaus möglich, einen Wabenkörper so weit zu kompremieren, daß er über eine Innensicke geschoben werden kann und sich dahinter wieder etwas ausdehnt. Für viele Anwendungsfälle ist es jedoch möglich, auf das zusätzliche Einbringen von Innensicken ganz zu verzichten.

Natürlich können sämtliche vorbeschriebenen Maßnahmen unverändert angewendet werden, wenn die Wabenkörper unterschiedliche Anzahlen von Strömungskanälen pro Querschnittsfläche aufweisen. Auch die Verwendung für Wabenkörper mit über den Strömungsquerschnitt verteilt unterschiedlicher Anzahl von Strömungskanälen pro Querschnittsfläche ist möglich.

Wichtig ist auch, daß eine gemeinsame Beschichtung von mehreren Wabenkörpern in einem Mantelrohr möglich ist. Auch in der mangelnden Erfahrung auf diesem Gebiet liegt wahrscheinlich ein Grund für die bisher fehlende großtechnische Anwendung so hergestellter katalytischer Konverter. Zunächst war vermutet worden, daß bei der Beschichtung mit keramischem Material, welche im allgemeinen durch eine Berieselung mit einer Aufschlämmung keramischer Partikel erfolgt, Schwierigkeiten entstehen könnten, da sich im oberen Wabenkörper größere Tropfen bilden könnten, die dann den unteren Wabenkörper verstopfen würden. Tatsächlich aber hat sich, wie im folgenden noch näher erläutert, bei Einhaltung bestimmter Randbedingungen gezeigt, daß eine gleichmäßige Beschichtung auch von mehreren Wabenkörpern in einem Mantelrohr möglich ist.

Die gestellte Aufgabe, auch ein Verfahren zur Herstellung eines katalytischen Konverters zu schaffen, wird durch ein Verfahren gelöst, bei dem in ein vorgefertigtes Mantelrohr nacheinander oder gleichzeitig von einer oder zwei Seiten mindestens zwei elastischen Wabenkörper aus Lagen strukturierter Bleche unter Vorspannung eingebracht werden, indem die Wabenkörper vor dem Einbringen um 2 bis 10 % ihres theoretischen spannungsfreien Durchmessers elastisch komprimiert werden und/oder das Mantelrohr nach dem Einbringen zumindest in Teilbereichen um 2 bis 10 % seines Innendurchmessers plastisch zusammengepreßt wird, so daß aufgrund ihres inneren Aufbaus elastische Wabenkörper (2, 3; 12, 13, 14; 22, 23; 52, 53; 82, 83) unter einer elastischen Kompression von 2 bis 10 % ihres theoretischen spannungsfreien Durchmessers (d) mit Vorspannung in das Mantelrohr (1; 11; 21; 51; 81, 84, 85) eingesetzt sind.

Grundsätzlich macht es keinen Unterschied, ob ein elastisch komprimierter Wabenkörper in ein unverändertes Mantelrohr eingebracht wird oder ob durch plastisches Verformen eines Mantelrohres die zunächst geringe elastische Verformung eines Wabenkörpers nach dem Einsetzen in das Mantelrohr erhöht wird. Auch Kombinationen beider Varianten sind möglich, wobei insgesamt wieder mindestens eine Vorspannung entstehen muß, die einer Kompression um zwei bis zehn Prozent des theoretischen spannungsfreien Durchmessers des Wabenkörpers entspricht.

Damit die Wabenkörper später mit dem Mantelrohr fest verlötet werden können, ist es vorteilhaft, vor dem Einbringen der Wabenkörper das Mantelrohr innenseitig zumindest in Teilbereichen mit Lotpulver zu versehen, eine Maßnahme, die an sich bekannt ist.

Ebenfalls ist an sich bekannter Weise können die äußeren Stirnseiten der Wabenkörper nach dem Einbringen in das Mantelrohr mit Lotpulver beaufschlagt werden. Andere Verfahren zum Aufbringen des Lotpulvers vor oder beim Wickeln der Wabenkörper sind jedoch ebenfalls möglich.

Zur Erhöhung der mechanischen Stabilität der ganzen Anordnung und zum zusätzlichen Fixieren der Wabenkörper, können vor oder nach deren Einbringen in das Mantelrohr Innensicken gedrückt werden. Diese können als Anschlag und/oder lagegenaue Sicherung der Wabenkörper dienen.

Durch die bisherigen Verfahrensschritte wird sichergestellt, daß die Vorspannung des Wabenkörpers auch für eine Fixierung während eines Hochtemperatur-Vakuumlötprozesses ausreicht. Die Wabenkörper können daher in aufrechter Stellung in einem Lötofen gelötet werden, was neben Platzersparnis zusätzliche technische Vorteile hat. Zum einen wird eine in Umfangsrichtung gleichmäßigere Verteilung von Lot erreicht, da dieses in flüssigem Zustand nicht auf einer Seite des Wabenkörpers zusammenlaufen kann, zum anderen werden Verformungen vermieden. Auch für die Evakuierung des Ofens kann die aufrechte Stellung Vorteile bringen.

Auch bei einer anschließenden Beschichtung ist aus ähnlichen Gründen die aufrechte Stellung besonders vorteilhaft. Zur Beschichtung mit einer keramischen Masse werden die Wabenkörper von oben mit einer Aufschlämmung keramischer Partikel berieselt. Solange die aufgeschlämmten keramischen Partikel in ihrer Korngröße erheblich kleiner als der Durchmesser der Kanäle sind, ist eine Beschichtung von mehreren untereinander liegenden Wabenkörpern problemlos möglich.

Dabei ist es empfehlenswert. bei Wabenkörpern mit unterschiedlicher Anzahl von Strömungskanälen pro Querschnittsfläche, den Wabenkörper mit der kleineren Anzahl von Strömungskanälen pro Querschnittsfläche oben anzuordnen, so daß dieser zuerst von der Aufschlämmung berieselt wird. In diesem Falle wird die Verteilung der Aufschlämmung nicht wesentlich verändert und, es bilden sich auch keine größeren Tropfen, die tiefer gelegene Kanäle eines zweiten Wabenkörpers verstopfen könnten.

Bei gestuften Mantelrohren mit Wabenrohren von unterschiedlichem Querschnitt empfiehlt es sich, den Wabenkörper mit dem größeren Querschnitt von oben zu berieseln, da dann sichergestellt ist, daß der tieferliegende kleinere Wabenkörper auch vollständig beschichtet wird, was bei der umgekehrten Anordnung nicht problemlos erreichbar wäre.

Im Folgenden wird die Erfindung anhand einiger Ausführungsbeispiele in der Zeichnung näher erläutert, wobei die Erfindung jedoch nicht auf diese Ausführungsbeispiele beschränkt ist. Es zeigen
- Fig. 1: eine perspektivische, teilweise aufgebrochene Ansicht eines katalytischen Konverters mit 2 in einem Mantelrohr angeordneten Wabenkörpern,
- Fig. 2: einen Wabenkörper mit quer zur Strömungsrichtung verlaufenden Mikrostrukturen bei der Herstellung,
- Fig. 3: ein Mantelrohr mit 3 Wabenkörpern unterschiedlicher Zellenzahl pro Querschnittsfläche im schematischen Querschnitt,
- Fig. 4: ein Mantelrohr mit einer Innensicke zur zusätzlichen Fixierung von 2 Wabenkörpern im schematischen Querschitt,
- Figuren 5, 6 und 7: schematisch einen anderen Aufbau eines katalytischen Konverters mit 2 Wabenkörpern und
- Fig. 8: einen Querschnitt durch einen katalytischen Konverter mit 2 Wabenkörpern unterschiedlichen Durchmessers.

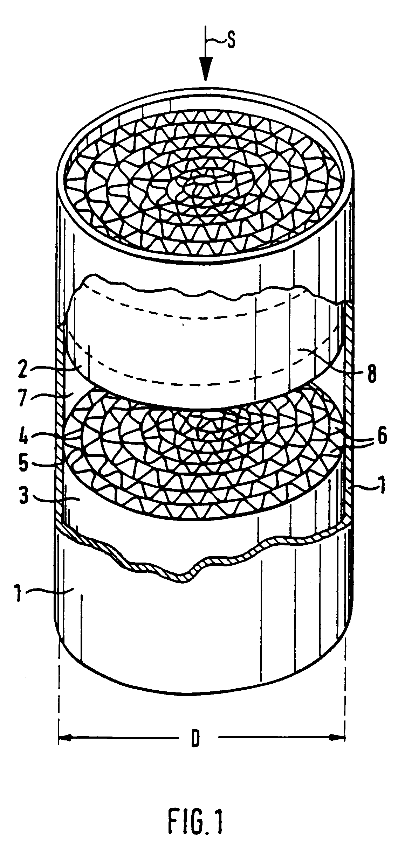

Der katalytische Konverter in Fig. 1 umfaßt ein Mantelrohr 1 mit einem Innendurchmesser D, in welches zwei Wabenkörper 2, 3 eingesetzt sind. Beide Wabenkörper bestehen aus abwechselnden Lagen glatter 4 und gewellter 5 Bleche, welche eine Vielzahl von Strömungskanälen 6 bilden, welche in Strömungsrichtung S von einem Fluid durchströmbar sind. Zwischen den Wabenkörpern 2, 3 befindet sich ein freier Zwischenraum 7. Wie bei dem Wabenkörper 2 durch gestrichelte Linien angedeutet, kann dieser in einer bestimmten Umfangszone 8 mit dem Mantelrohr 1 verlötet sein. Das gleiche gilt natürlich für den Wabenkörper 3. Die in Fig. 1 zur Vereinfachung spiralig gewickelt dargestellten Wabenkörper 2, 3 müssen eine solche Struktur ihrer Blechlagen 4, 5 bzw. einen solchen inneren Aufbau aufweisen, daß sie besonders elastisch sind. Die Elastizität muß mindestens so groß sein, daß ein vorspannungsfrei gewickelter Körper elastisch so stark verformt werden kann, daß sein Durchmesser um 2 bis 10 % abnimmt. Der Durchmesser d der Wabenkörper 2, 3, der sich außerhalb des Mantelrohres 1 im spannungsfreien Zustand einstellen würde, wäre daher entsprechend größer als der Innendurchmesser D des Mantelrohres 1.

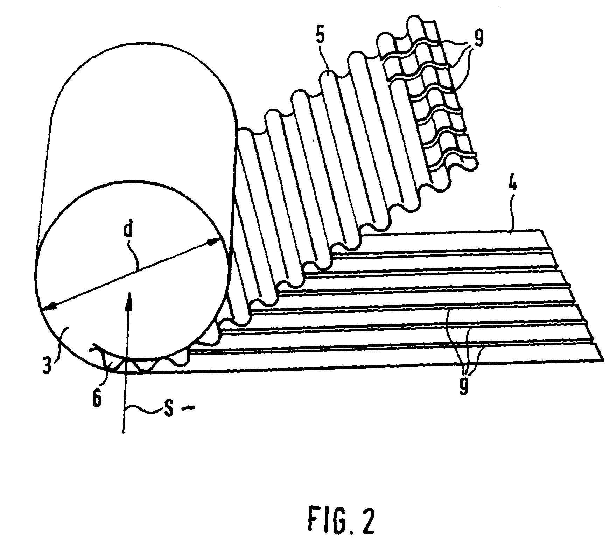

Fig. 2 zeigt den prinzipiellen Aufbau eines spiralig gewickelten Wabenkörpers 3, wobei dieser im vorliegenden Falle aus einem hauptsächlich glatten Blech 4 und einem gewellten Blech 5 besteht. Für die vorliegende Erfindung wäre die Verwendung von zwei unterschiedlich stark gewellten Blechlagen noch günstiger, da sich elastischere Körper ergeben. Um zusätzlich ein Verrutschen der Lagen des aufgewickelten Körpers in axialer Richtung zu verhindern, können quer zur Strömungsrichtung S Mikrostrukturen 9 in allen Blechlagen vorgesehen werden, die sich ineinander verhaken und dadurch Formschlußverbindungen bilden. die die Stabilität des ganzen Körpers erhöhen. Solche Mikrostrukturen 9 sind auch zur Beeinflussung der Strömung in den Kanälen 6 des Wabenkörpers vorteilhaft. Angedeutet ist in Fig. 2 auch der Durchmesser d des Wabenkörpers 3.

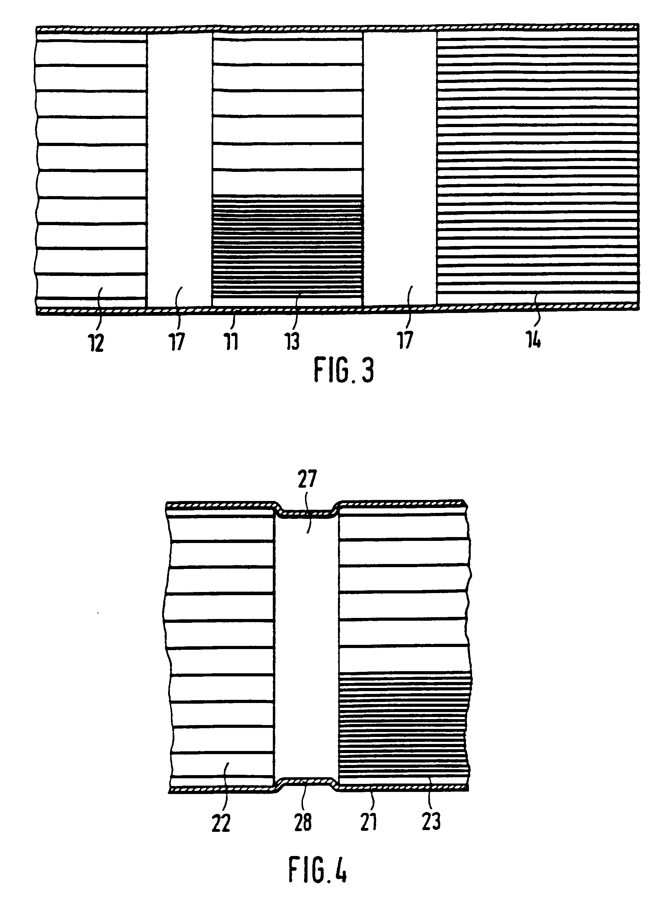

Fig. 3 zeigt im schematischen Querschnitt ein Mantelrohr 11, in welchem drei Wabenkörper 12, 13, 14 mit unterschiedlicher Anzahl von Strömungskanälen pro Querschnittsfläche angeordnet sind. Zwischen den Wabenkörpern 12, 13, 14 verbleiben freie Zwischenräume 17. Solche Wabenkörper lassen sich gemäß der vorliegenden Erfindung besonders wirtschaftlich in großen Serien herstellen, wobei die spezifischen Anforderungen an das Volumen und die Zahl der Strömungskanäle pro Querschnittsfläche in den einzelnen Wabenkörpern 12, 13, 14 flexibel an die jeweiligen Anwendungsbedingungen angepaßt werden können.

Fig. 4 zeigt, auf welche Weise durch Innensicken 28 in einem Mantelrohr 21 eine zusätzliche Fixierung für Wabenkörper 22, 23 geschaffen werden kann. Im gezeigten Beispiel dient die Innensicke 28 als Anschlag für die von den Stirnseiten eingeschobenen Wabenkörper. Dadurch wird eine besonders maßgenaue Fertigung erleichtert. Gleiche Innensicken können jedoch auch an den Stirnseiten zur Fixierung der Wabenkörper dienen, wobei beim Einschieben der Wabenkörper dann so stark zusammengepreßt werden muß, daß er an der Innensicke vorbei paßt und sich dahinter wieder etwas ausdehnt. Auch ist es möglich, Innensicken erst nach dem Einsetzen der Wabenkörper 22, 23 in das Mantelrohr 21 einzubringen.

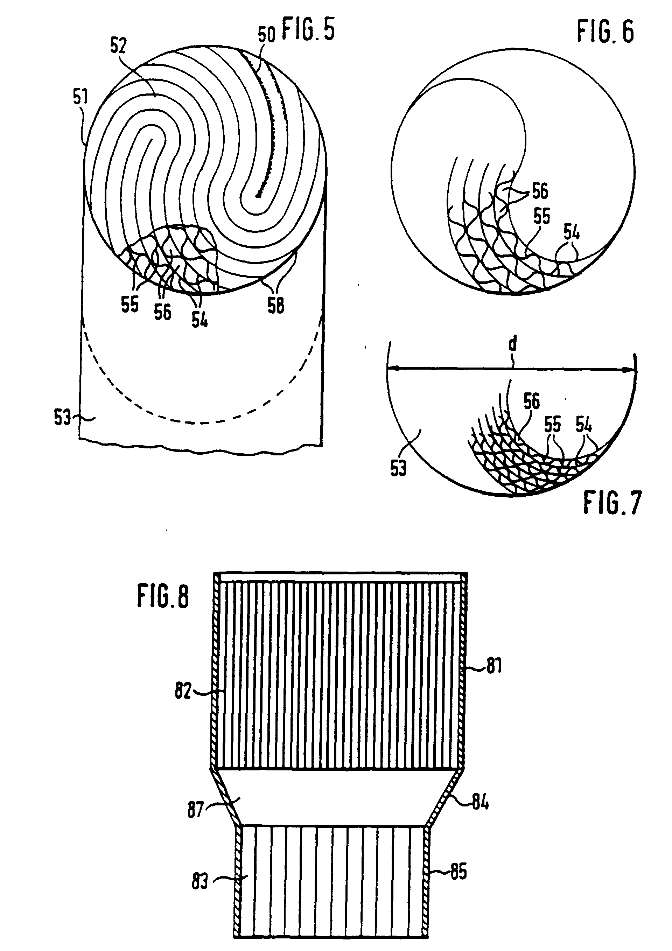

Die Figuren 5, 6 und 7 zeigen schematisch einen anderen möglichen Aufbau eines katalytischen Konverters aus Wabenkörpern 52, 53 mit S-förmig verschlungenen Blechlagen 54, 55, welche ebenfalls eine Vielzahl von Strömungskanälen 56 bilden. Dabei zeigt die Fig. 6 den Wabenkörper 52 mit einer geringen Anzahl von Strömungskanälen 56 pro Querschnittsfläche. Fig. 7 zeigt, daß der in Fig. 5 nur gestrichelt angedeutete Wabenkörper 53 eine größere Anzahl von Strömungskanälen pro Querschnittsfläche aufweist. Auch der theoretische spannungsfreie Durchmesser d des Wabenkörpers 53 ist in Fig. 7 angedeutet. Die auf die einzelnen Blechlagen 54, 55 aufzubringende Beschichtung 50 ist in Fig. 5 ebenfalls schematisch angedeutet.

Fig. 8 zeigt ein weiteres Ausführungsbeispiel für einen katalytischen Konverter, welcher aus einem Wabenkörper 83 besteht der einen kleineren Durchmesser als ein zweiter Wabenkörper 82 hat. Beide Wabenkörper 82, 83 sind in einem Mantelrohr untergebracht, welches aus einem Abschnitt 81 mit großem Durchmesser, einem konischen Abschnitt 84 und einem Abschnitt 85 mit kleinerem Durchmesser besteht.

Erfindungsgemäß gestaltete und hergestellte katalytische Konverter sind insbesondere für eine wirtschaftliche Großserienfertigung geeignet, was insbesondere für den Einsatz in Kraftfahrzeugen erwünscht ist. Die meisten bekannten Bauformen und viele zur Verbesserung solcher Wabenkörper bekannten Ausgestaltungen sind problemlos auch bei den erfindungsgemäßen katalytischen Konvertern einsetzbar.

## Patentansprüche

1. Katalytischer Konverter umfassend:
- ein Mantelrohr (1; 11; 21; 51; 81, 84, 85) mit einem Innendurchmesser (D),
- mindestens zwei einzelne, in dem Mantelrohr (1; 11; 21; 51; 81, 84, 85) angeordnete, von einem Fluid in einer Strömungsrichtung (S) durchströmbare Wabenkörper (2, 3; 12, 13, 14; 22, 23; 52, 53; 82, 83) aus Lagen (4, 5; 54, 55) strukturierter Bleche, welche Strömungskanäle (6) bilden,
- wobei die Lagen (4, 5; 54, 55) mit dem Mantelrohr (1; 11; 21; 51; 81, 84, 85) hartverlötet sind,
dadurch gekennzeichnet,
daß aufgrund ihres inneren Aufbaus elastische Wabenkörper (2, 3; 12, 13, 14; 22, 23; 52, 53; 82, 83) unter einer elastischen Kompression von 2 bis 10 % ihres theoretischen spannungsfreien Durchmessers (d) mit Vorspannung in das Mantelrohr (1; 11; 21; 51; 81, 84, 85) eingesetzt sind.

2. Katalytischer Konverter nach Anspruch 1, dadurch gekennzeichnet, daß die Wabenkörper (2, 3; 12, 13, 14; 22, 23; 52, 53; 82, 83) durch ihre Bauform oder durch interne Formschlußverbindungen (9) an einer axialen Verschiebung ihrer Lagen (4, 5; 54, 55) gegeneinander gehindert sind.

3. Katalytischer Konverter nach Anspruch 1, dadurch gekennzeichnet, daß das Mantelrohr (1; 11; 21; 51; 81, 84, 85) und die Lagen (4, 5; 54, 55) aus unterschiedlichen Materialien mit einer solchen Paarung bestehen, daß die Reibung zwischen Mantelrohr (1; 11; 21; 51; 81, 84, 85) und Lagen (4, 5; 54, 55) bei der bestehenden Vorspannung bei allen Fertigungsschritten möglichst groß ist.

4. Katalytischer Konverter nach Anspruch 3, dadurch gekennzeichnet, daß das Mantelrohr (1; 11; 21; 51; 81, 84, 85) aus ferritischem korrosionsbeständigem Edelstahl besteht, insbesondere dem Werkstoff Nr. 1.4509 oder 1.4512.

5. Katalytischer Konverter nach einem der vorhergehenden Ansprüche, dadurch gekennzeichnet, daß die Lagen (54, 55) strukturierter Bleche aus vielen einzelnen untereinander verschlungenen Blechen bestehen, die mit ihren Enden (58) jeweils am Mantelrohr (1; 11; 21; 51; 81, 84, 85) befestigt sind.

6. Katalytischer Konverter nach einem der vorhergehenden Ansprüche, dadurch gekennzeichnet, daß die Wabenkörper (2, 3; 12, 13, 14; 22, 23; 52, 53; 82, 83) aus mindestens zwei Sorten unterschiedlich gewellter Bleche (5; 55) bestehen, die vorzugsweise spiralig aufgewikkelt sind.

7. Katalytischer Konverter nach einem der vorhergehenden Ansprüche, dadurch gekennzeichnet, daß die Lagen (4, 5) quer oder schräg zur Strömungsrichtung (S) verlaufende Mikrostrukturen (9) aufweisen mit einer Höhe von bis zu 200 Mikrometer, welche Formschlußverbindungen (9) zwischen den Lagen (4, 5) bewirken.

8. Katalytischer Konverter nach einem der vorhergehenden Ansprüche, dadurch gekennzeichnet, daß das Mantelrohr (1; 11; 21; 51; 81, 84, 85) einstückig ohne Rundschweißnaht zwischen den Wabenkörpern (2, 3; 12, 13, 14; 22, 23; 52, 53; 82, 83) ausgebildet ist.

9. Katalytischer Konverter nach einem der vorhergehenden Ansprüche, dadurch gekennzeichnet, daß das Mantelrohr (81, 84, 85) gestuft mit unterschiedlichen Durchmessern für die einzelnen Wabenkörper (82, 83) gestaltet ist.

10. Katalytischer Konverter nach einem der vorhergehenden Ansprüche, dadurch gekennzeichnet, daß das Mantelrohr (21) Innensicken (28) aufweist, welche die Position der Wabenkörper (22, 23) fixieren.

11. Katalytischer Konverter nach einem der vorhergehenden Ansprüche, dadurch gekennzeichnet, daß die Wabenkörper (12, 13, 14; 22, 23; 52, 53; 82, 83) unterschiedliche Anzahlen von Strömungskanälen (56) pro Querschnittsfläche aufweisen.

12. Katalytischer Konverter nach einem der vorhergehenden Ansprüche, dadurch gekennzeichnet, daß die Wabenkörper (2, 3; 12, 13, 14; 22, 23; 52, 53; 82, 83) in dem Mantelrohr (1; 21; 51; 81, 84, 85) gemeinsam im gleichen Arbeitsgang mit keramischer Masse (50) und katalytisch aktivem Material beschichtet sind.

13. Verfahren zur Herstellung eines Katalytischen Konverters nach einem der vorhergehenden Ansprüche,
dadurch gekennzeichnet,
daß in ein vorgefertigtes Mantelrohr (1; 11; 21; 51; 81, 84, 85) nacheinander oder gleichzeitig von einer oder zwei Seiten mindestens zwei elastischen Wabenkörper (2, 3; 12, 13, 14; 22, 23; 52, 53; 82, 83) aus Lagen strukturierter Bleche unter Vorspannung eingebracht werden, indem die Wabenkörper (2, 3; 12, 13, 14; 22, 23; 52, 53; 82, 83) vor dem Einbringen um 2 bis 10 % ihres theoretischen spannungsfreien Durchmessers (d) elastisch komprimiert werden und/oder das Mantelrohr (1; 11; 21; 51; 81, 84, 85) nach dem Einbringen zumindest in Teilbereichen um 2 bis 10 % seines Innendurchmessers (D) plastisch zusammengepreßt wird, so daß aufgrund ihres inneren Aufbaus elastische Wabenkörper (2, 3; 12, 13, 14; 22, 23; 52, 53; 82, 83) unter einer elastischen Kompression von 2 bis 10 % ihres theoretischen spannungsfreien Durchmessers (d) mit Vorspannung in das Mantelrohr (1; 11; 21; 51; 81, 84, 85) eingesetzt sind.

14. Verfahren nach Anspruch 13, dadurch gekennzeichnet, daß das Mantelrohr (1; 11; 21; 51; 81, 84, 85) vor dem Einbringen der Wabenkörper (2, 3; 12, 13, 14; 22, 23; 52, 53; 82, 83) zumindest in Teilbereichen (8) innenseitig mit Lotpulver versehen wird.

15. Verfahren nach Anspruch 13 oder 14, dadurch gekennzeichnet, daß die äußeren Stirnseiten der Wabenkörper (2, 3; 12, 13, 14; 22, 23; 52, 53; 82, 83) nach dem Einbringen in das Mantelrohr (1; 11; 21; 51; 81, 84, 85) mit Lotpulver beaufschlagt werden.

16. Verfahren nach einem der Ansprüche 13 bis 15, dadurch gekennzeichnet, daß in das Mantelrohr (21) vor oder nach dem Einbringen der Wabenkörper (22, 23) Innensicken (28) gedrückt werden, die als zusätzliche Fixierung der Wabenkörper (22, 23) dienen.

17. Verfahren nach einem der Ansprüche 13 bis 16, dadurch gekennzeichnet, daß das Mantelrohr (1; 11; 21; 51; 81, 84, 85) mit eingesetzten Wabenkörpern (2, 3; 12, 13, 14; 22, 23; 52, 53; 82, 83) in aufrechter Stellung, d.h. mit senkrecht stehender Längsachse einem Hochtemperatur-Vakuumlötprozeß unterworfen wird.

18. Verfahren nach einem der Ansprüche 13 bis 17, dadurch gekennzeichnet, daß Mantelrohr (1; 11; 21; 51; 81, 84, 85) und Wabenkörper (2, 3; 12, 13, 14; 22, 23; 52, 53; 82, 83) gemeinsam in aufrechter Stellung von oben mit einer Aufschlämmung keramischer Partikel berieselt werden zum Aufbringen einer porösen keramischen Beschichtung (50).

19. Verfahren nach Anspruch 18, dadurch gekennzeichnet, daß bei Wabenkörpern (12, 13, 14; 22, 23; 52, 53; 82, 83) mit unterschiedlicher Anzahl von Strömungskanälen pro Querschnittsfläche der Wabenkörper (22, 52) mit der kleineren Anzahl von Strömungskanälen (56) pro Querschnittsfläche oben liegt und zuerst von der Aufschlämmung berieselt wird.

20. Verfahren nach Anspruch 18, dadurch gekennzeichnet, daß bei einem gestuften Mantelrohr (81, 84, 85) mit Wabenkörpern (82, 83) von unterschiedlichem Querschnitt der Wabenkörper (82) mit dem größeren Querschnitt oben liegt und zuerst von der Aufschlämmung berieselt wird.

## Claims

1. A catalytic converter comprising:
- a casing tube (1; 11; 21; 51; 81, 84, 85) of an inside diameter (D),
- at least two individual honeycomb bodies (2, 3; 12, 13, 14; 22, 23; 52, 53; 82, 83) which are arranged in the casing tube (1; 11; 21; 51; 81, 84, 85) and through which a fluid can flow in a flow direction (S) and which comprise layers (4, 5; 54, 55) of structured metal sheets forming flow passages (6),
- wherein the layers (4, 5; 54, 55) are brazed to the casing tube (1; 11; 21; 51; 81, 84, 85),
characterised in that
honeycomb bodies (2, 3; 12, 13, 14; 22, 23; 52, 53; 82, 83) which are elastic by virtue of their internal structure are fitted with prestressing into the casing tube (1; 11; 21; 51; 81, 84, 85) with elastic compression of from 2 to 10% of their theoretical stress-free diameter (d).

2. A catalytic converter according to claim 1 characterised in that the honeycomb bodies (2, 3; 12, 13, 14; 22, 23; 52, 53; 82, 83) are prevented from axial displacement of their layers (4, 5; 54, 55) relative to each other by virtue of their structural form or by internal positively locking connections (9).

3. A catalytic converter according to claim 1 characterised in that the casing tube (1; 11; 21; 51; 81, 84, 85) and the layers (4, 5; 54, 55) comprise different materials of such a pairing that the friction between the casing tube (1; 11; 21; 51; 81, 84, 85) and the layers (4, 5; 54, 55) is as large as possible with the existing prestressing in all production steps.

4. A catalytic converter according to claim 3 characterised in that the casing tube (1; 11; 21; 51; 81, 84, 85) comprises ferritic corrosion-resistant high-quality steel, in particular the material No 1.4509 or 1.4512.

5. A catalytic converter according to one of the preceding claims characterised in that the layers (54, 55) of structured metal sheets comprise many individual mutually intertwined metal sheets which are fixed with their respective ends (58) to the casing tube (1; 11; 21; 51; 81, 84, 85).

6. A catalytic converter according to one of the preceding claims characterised in that the honeycomb bodies (2, 3; 12, 13, 14; 22, 23; 52, 53; 82, 83) comprise at least two kinds of differently corrugated metal sheets (5; 55) which are wound preferably spirally.

7. A catalytic converter according to one of the preceding claims characterised in that the layers (4, 5) have microstructures (9) extending transversely or inclinedly with respect to the flow direction (S), of a height of up to 200 micrometers, which produce positively locking connections (9) between the layers (4, 5).

8. A catalytic converter according to one of the preceding claims characterised in that the casing tube (1; 11; 21; 51; 81, 84, 85) is formed integrally without a round weld seam between the honeycomb bodies (2, 3; 12, 13, 14; 22, 23; 52, 53; 82, 83).

9. A catalytic converter according to one of the preceding claims characterised in that the casing tube (81, 84, 85) is of a stepped configuration with different diameters for the individual honeycomb bodies (82, 83).

10. A catalytic converter according to one of the preceding claims characterised in that the casing tube (21) has internal beads (28) which fix the positions of the honeycomb bodies (22, 23).

11. A catalytic converter according to one of the preceding claims characterised in that the honeycomb bodies (12, 13, 14; 22, 23; 52, 53; 82, 83) have different numbers of flow passages (56) per unit of cross-sectional area.

12. A catalytic converter according to one of the preceding claims characterised in that the honeycomb bodies (2, 3; 12, 13, 14; 22, 23; 52, 53; 82, 83) in the casing tube (1; 21; 51; 81, 84, 85) are jointly coated in the same working operation with ceramic substance (50) and catalytically active material.

13. A process for producing a catalytic converter according to one of the preceding claims
characterised in that
at least two elastic honeycomb bodies (2, 3; 12, 13, 14; 22, 23; 52, 53; 82, 83) comprising layers of structured metal sheets are introduced with prestressing into a prefabricted casing tube (1; 11; 21; 51; 81, 84, 85) successively or simultaneously from one or both sides by the honeycomb bodies (2, 3; 12, 13, 14; 22, 23; 52, 53, 82, 83) being elastically compressed by 2 to 10% of their theoretical stress-free diameter (d) before they are introduced and/or by the casing tube (1; 11; 21; 51; 81, 84, 85) being plastically compressed after being introduced at least in partial regions by from 2 to 10% of its inside diameter (D) so that honeycomb bodies (2, 3; 12, 13, 14; 22, 23; 52, 53; 82, 83) which are elastic by virtue of their internal structure are fitted with prestressing into the casing tube (1; 11; 21; 51; 81, 84, 85) with elastic compression of from 2 to 10% of their theoretical stress-free diameter (d).

14. A process according to claim 13 characterised in that before the honeycomb bodies (2, 3; 12, 13, 14; 22, 23; 52, 53; 82, 83) are introduced the casing tube (1; 11; 21; 51; 81, 84, 85) is provided with brazing powder at least in partial regions (8) on its inside.

15. A process according to claim 13 or claim 14 characterised in that after introduction into the casing tube (1; 11; 21; 51; 81, 84, 85) the outer ends of the honeycomb bodies (2, 3; 12, 13, 14; 22, 23; 52, 53; 82, 83) are covered with brazing powder.

16. A process according to one of claims 13 to 15 characterised in that before or after the honeycomb bodies (22, 23) are introduced internal beads (28) are pressed into the casing tube (21), for additionally fixing the honeycomb bodies (22, 23).

17. A process according to one of claims 13 to 16 characterised in that the casing tube (1; 11; 21; 51; 81, 84, 85) with inserted honeycomb bodies (2, 3; 12, 13, 14; 22, 23; 52, 53; 82, 83) is subjected to a high temperature vacuum brazing process in an upright position, that is to say with the longitudinal axis disposed vertically.

18. A process according to one of claims 13 to 17 characterised in that the casing tube (1; 11; 21; 51; 81, 84, 85) and the honeycomb bodies (2, 3; 12, 13, 14; 22, 23; 52, 53; 82, 83) are jointly sprinkled in an upright position from above with a slurry of ceramic particles for applying a porous ceramic coating (50).

19. A process according to claim 18 characterised in that in the case of honeycomb bodies (12, 13, 14; 22, 23; 52, 53; 82, 83) with a different number of flow passages per unit of cross-sectional area the honeycomb body (22, 52) with the smaller number of flow passages (56) per unit of cross-sectional area is at the top and has the slurry sprinkled thereon first.

20. A process according to claim 18 characterised in that in the case of a stepped casing tube (81, 84, 85) with honeycomb bodies (82, 83) of different cross-sections the honeycomb body (82)of the largest cross-section is at the top and has the slurry sprinkled thereon first.

## Revendications

1. Convertisseur catalytique comprenant :
- un fourreau tubulaire (1 ; 11 ; 21 ; 51 ; 81, 84, 85) avec un diamètre intérieur (D),
- au moins deux corps cellulaires distincts (2, 3 ; 12, 13, 14 ; 22, 23 ; 52, 53 ; 82, 83) disposés dans le fourreau tubulaire (1 ; 11 ; 21 ; 51 ; 81, 84, 85), parcourus par un fluide dans une direction d'écoulement (S) et constitués de couches (4, 5 ; 54, 55) de tôles structurées formant des canaux d'écoulement (6),
- les couches (4, 5 ; 54, 55) étant solidarisées au fourreau tubulaire (1 ; 11 ; 21 ; 51 ; 81, 84, 85) par brasage fort,
caractérisé en ce que,
en raison de leur structure intérieure, les corps cellulaires élastiques (2, 3 ; 12, 13, 14 ; 22, 23 ; 52, 53 ; 82, 83) sont logés dans le fourreau tubulaire (1 ; 11 ; 21 ; 51 ; 81, 84, 85) avec une précontrainte sous une compression élastique comprise entre 2 et 10 % de leur diamètre théorique sans contrainte (d).

2. Convertisseur catalytique selon la revendication 1, caractérisé en ce que, grâce à leur forme structurelle ou à des liaisons intérieures par complémentarité de formes (9), les couches (4, 5 ; 54, 55) des corps cellulaires (2, 3 ; 12, 13, 14 ; 22, 23 ; 52, 53 ; 82, 83) ne peuvent pas se déplacer axialement les unes par rapport aux autres.

3. Convertisseur catalytique selon la revendication 1, caractérisé en ce que le fourreau tubulaire (1 ; 11 ; 21 ; 51 ; 81, 84, 85) et les couches (4, 5 ; 54, 55) sont réalisés dans des matériaux différents avec un appariement tel que, sous la précontrainte existante, le frottement entre le fourreau tubulaire (1 ; 11 ; 21; 51 ; 81, 84, 85) et les couches (4, 5 ; 54, 55) soit le plus élevé possible dans toutes les étapes de la fabrication.

4. Convertisseur catalytique selon la revendication 3, caractérisé en ce que le fourreau tubulaire (1 ; 11 ; 21 ; 51 ; 81, 84, 85) est réalisé en acier fin ferritique résistant à la corrosion, en particulier en matériau n° 1.4509 ou 1.4512.

5. Convertisseur catalytique selon l'une des revendications précédentes, caractérisé en ce que les couches (54, 55) de tôles structurées sont constituées d'une pluralité de tôles individuelles qui sont emboîtées les unes dans les autres et dont chacune des extrémités (58) est fixée au fourreau tubulaire (1 ; 11 ; 21 ; 51 ; 81, 84, 85).

6. Convertisseur catalytique selon l'une des revendications précédentes, caractérisé en ce que les corps cellulaires (2, 3 ; 12, 13, 14 ; 22, 23 ; 52, 53 ; 82, 83) sont constitués d'au moins deux sortes de tôles à ondulations différentes (5 ; 55) qui sont enroulées de préférence en spirale.

7. Convertisseur catalytique selon l'une des revendications précédentes, caractérisé en ce que les couches (4, 5) présentent des microstructures (9) d'une hauteur maximale de 200 micromètres qui s'étendent transversalement ou en biais par rapport à la direction d'écoulement (S) et qui créent des liaisons par complémentarité de formes (9) entre les couches (4, 5).

8. Convertisseur catalytique selon l'une des revendications précédentes, caractérisé en ce que le fourreau tubulaire (1 ; 11 ; 21 ; 51 ; 81, 84, 85) est conçu d'un seul tenant sans joint soudé circulaire entre les corps cellulaires (2, 3 ; 12, 13, 14 ; 22, 23 ; 52, 53 ; 82, 83).

9. Convertisseur catalytique selon l'une des revendications précédentes, caractérisé en ce que le fourreau tubulaire (81, 84, 85) présente une forme étagée avec des diamètres différents pour chacun des corps cellulaires (82, 83).

10. Convertisseur catalytique selon l'une des revendications précédentes, caractérisé en ce que le fourreau tubulaire (21) comporte des moulures intérieures (28) qui définissent la position des corps cellulaires (22, 23).

11. Convertisseur catalytique selon l'une des revendications précédentes, caractérisé en ce que les corps cellulaires (12, 13, 14 ; 22, 23 ; 52, 53 ; 82, 83) comportent des nombres différents de canaux d'écoulement (56) par section transversale.

12. Convertisseur catalytique selon l'une des revendications précédentes, caractérisé en ce que les corps cellulaires (2, 3 ; 12, 13, 14 ; 22, 23 ; 52, 53 ; 82, 83) présents dans le fourreau tubulaire (1 ; 21 ; 51 ; 81, 84, 85) sont revêtus ensemble, au cours d'une même opération, d'une masse céramique (50) et d'un matériau à action catalytique.

13. Procédé de fabrication d'un convertisseur catalytique selon l'une des revendications précédentes,
caractérisé en ce qu'au moins deux corps cellulaires élastiques (2, 3 ; 12, 13, 14 ; 22, 23 ; 52, 53 ; 82, 83) constitués de couches de tôles structurées sont introduits successivement ou simultanément, sous précontrainte, dans un fourreau tubulaire préfabriqué (1 ; 11 ; 21 ; 51 ; 81, 84, 85) par l'un de ses côtés ou par les deux en comprimant élastiquement les corps cellulaires (2, 3 ; 12, 13, 14 ; 22, 23 ; 52, 53 ; 82, 83) avant leur introduction dans une proportion de 2 à 10 % de leur diamètre théorique sans contrainte (d) et/ou en soumettant au moins des zones partielles du fourreau tubulaire (1 ; 11 ; 21 ; 51 ; 81, 84, 85) à une compression plastique comprise entre 2 et 10 % de son diamètre intérieur (D) à l'issue de l'introduction, de façon que, grâce à leur structure intérieure, les corps cellulaires élastiques (2, 3 ; 12, 13, 14 ; 22, 23 ; 52, 53 ; 82, 83) soient logés dans le fourreau tubulaire (1 ; 11 ; 21 ; 51 ; 81, 84, 85) sous une compression élastique comprise entre 2 et 10 % de son diamètre théorique sans contrainte (d).

14. Procédé selon la revendication 13, caractérisé en ce que la face intérieure du fourreau tubulaire (1 ; 11 ; 21 ; 51 ; 81, 84, 85) est garnie, au moins dans des zones partielles (8), de poudre à braser avant l'introduction des corps cellulaires (2, 3 ; 12, 13, 14 ; 22, 23 ; 52, 53 ; 82, 83).

15. Procédé selon la revendication 13 ou 14, caractérisé en ce que les faces frontales extérieures des corps cellulaires (2, 3 ; 12, 13, 14 ; 22, 23 ; 52, 53 ; 82, 83) sont revêtues de poudre à braser après leur introduction dans le fourreau tubulaire (1 ; 11 ; 21 ; 51 ; 81, 84, 85).

16. Procédé selon l'une des revendications 13 à 15, caractérisé en ce que des moulures intérieures (28) sont réalisées dans le fourreau tubulaire (21) avant ou après l'introduction des corps cellulaires (22, 23) et servent de moyen supplémentaire pour immobiliser les corps cellulaires (22, 23).

17. Procédé selon l'une des revendications 13 à 16, caractérisé en ce que, une fois que les corps cellulaires (2, 3 ; 12, 13, 14 ; 22, 23 ; 52, 53 ; 82, 83) y sont logés, le fourreau tubulaire (1 ; 11 ; 21 ; 51 ; 81, 84, 85) est soumis à un processus de brasage sous vide à haute température en position debout, c'est-à-dire avec son axe longitudinal orienté verticalement.

18. Procédé selon l'une des revendications 13 à 17, caractérisé en ce que le fourreau tubulaire (1 ; 11 ; 21; 51 ; 81, 84, 85) et les corps cellulaires (2, 3 ; 12, 13, 14 ; 22, 23 ; 52, 53 ; 82, 83) disposés debout sont exposés ensemble à un ruissellement par le haut de barbotine composée de particules céramiques et destinée à créer un revêtement céramique poreux (50).

19. Procédé selon la revendication 18, caractérisé en ce que, dans les corps cellulaires (12, 13, 14 ; 22, 23 ; 52, 53 ; 82, 83) présentant un nombre différent de canaux d'écoulement par section transversale, le corps cellulaire (22, 52) présentant le plus petit nombre de canaux d'écoulement (56) par section transversale se trouve en haut et est exposé le premier au ruissellement de barbotine.

20. Procédé selon la revendication 18, caractérisé en ce que, dans un fourreau tubulaire étagé (81, 84, 85) à corps cellulaires (82, 83) de différentes sections, le corps cellulaire (82) de plus grande section se trouve en haut et est exposé le premier au ruissellement de barbotine.
